# EUROPÄISCHE PATENTSCHRIFT

(11) **EP 1 883 487 B1**
(45) Veröffentlichungstag und Bekanntmachung des Hinweises auf die Patenterteilung: **22.09.2010**
(21) Anmeldenummer: 06724661.1
(22) Anmeldetag: 29.04.2006
(51) Int. Cl.: B23C 5/06, B23C 5/00, B23C 5/16, B23C 5/20, B23B 27/22, B23C 5/18

(54) **SCHNEIDEINSATZ FÜR EIN FRÄSWERKZEUG**
CUTTING INSERT FOR A MILLING TOOL
ELEMENT DE COUPE A INSERER POUR UN OUTIL DE FRAISAGE

(30) Priorität: 21.05.2005 DE 102005023532
(43) Veröffentlichungstag der Anmeldung: 06.02.2008
(73) Patentinhaber: KENNAMETAL INC., Latrobe, PA 15650-0231 (US)
(72) Erfinder: KAMMERMEIER, Dirk, 90547 Stein (DE); MYLAVARAM, Nikhilesh, Kumar, Reddy, Latrobe PA 15650 (US); BERNARD, Martin, 95512 Neudrossenfeld (DE); LIEBL, Bernhard, 91086 Aurachtal (DE)
(74) Vertreter: Tergau & Pohl Patentanwälte
(86) Internationale Anmeldenummer: PCT/EP2006/004048
(87) Internationale Veröffentlichungsnummer: WO 2006/125508

(56) Entgegenhaltungen:
- WO-A-00/44518
- WO-A-98/51436
- DE-A1- 19 716 818
- DE-U1-202004 007 811
- US-A- 3 673 653
- US-A- 4 854 784
- US-A- 6 120 218
- PATENT ABSTRACTS OF JAPAN Bd. 2000, Nr. 04, 31. August 2000 (2000-08-31) & JP 2000 024807 A (MITSUBISHI HEAVY IND LTD), 25. Januar 2000 (2000-01-25)

## Beschreibung

Die Erfindung betrifft einen Schneideinsatz für ein Fräswerkzeug gemäß dem Oberbegriff des Anspruchs 1, mit einem Schneidkörper, der eine Werkstückseite und eine vordere Stirnseite umfasst, die einen Eckbereich ausbilden, in dem eine Schneide zur spanenden Bearbeitung des Werkstücks angeordnet ist. Der Schneidkörper weist weiterhin eine Spanleitfläche auf.

Ein derartiger Schneideinsatz ist beispielsweise in der DE 19716 818 C2 oder der DE 20 2004 007 811 U1 beschrieben. Die bekannten Schneideinsätze dienen jeweils zum Einsatz bei einem Planfräser. Bei diesem werden mehrere der Einsätze an einem zylindrischen Werkzeuggrundkörper um den Umfang verteilt befestigt. Der Werkzeuggrundkörper besteht aus Leichtmetall, insbesondere aus Aluminium oder einer Aluminiumlegierung. Aufgrund des relativ weichen Materials sind beim Stand der Technik ein Spanleitelement bzw. ein Spanabweiser vorgesehen, welche den bei der spanenden Bearbeitung des Werkstücks abgetragenen Span vom Werkzeuggrundkörper fernhält, damit dieser nicht beschädigt wird. Bei der DE 197 16 818 C2 ist eine Spankammer des eigentlichen Schneideinsatzes durch ein zusätzliches Spanleitelement in Umfangsrichtung des Planfräsers weitergeführt. In der DE 20 2004 007 811 U1 ist zum gleichen Zweck ein über die Kontur des Schneideinsatzes hinausstehender Spanabweiser beschrieben, der die Spankammer begrenzt.

Beide Spanleitelemente dienen jedoch lediglich zum Schutz des Werkzeuggrundkörpers. Insbesondere bei der spanenden Bearbeitung von weichen Materialien, wie beispielsweise Leichtmetall-Werkstücke aus Aluminium, besteht das Problem, dass die abgetragenen Leichtmetall-Späne sich nur schwer entfernen lassen und ein vergleichsweise großes Haftungsvermögen zeigen. Es besteht daher die Gefahr, dass ein derartiger Span zu einer Beschädigung der Werkstückoberfläche führt.

Der vorliegenden Erfindung liegt daher die Aufgabe zugrunde, einen Schneideinsatz anzugeben, der für eine sichere und zuverlässige Spanabfuhr sorgt und damit eine Beschädigung sowohl des Werkzeuggrundkörpers als auch des zu bearbeitenden Werkstücks vermeidet.

Die Aufgabe wird erfindungsgemäß gelöst durch einen Schneideinsatz gemäß Patentanspruch 1. Der Schneideinsatz umfasst einen Schneidkörper, der üblicherweise eine quaderförmige Grundgeometrie hat. Der Schneidkörper weist eine Werkstückseite auf, die im eingebauten Zustand und beim Einsatz des Fräswerkzeugs zum Werkstück hin orientiert ist. Die Werkstückseite definiert eine Bearbeitungsfläche, die beim Einsatz mit der Oberfläche des zu bearbeitenden Werkstückes zusammenfällt. Diese Werkstückoberfläche kann prinzipiell auch gekrümmt sein. Die Bearbeitungsfläche wird hierbei durch eine Radialrichtung und eine Schnittrichtung der Werkstückseite aufgespannt. Der Schneidkörper wird weiterhin von einer vorderen Stirnseite begrenzt, die üblicherweise senkrecht zu der Bearbeitungsfläche orientiert ist und einen Eckbereich mit der Werkstückseite ausbildet. In diesem Eckbereich ist eine insbesondere als Schneideck ausgebildete Schneide zur spanenden Bearbeitung des Werkstücks angeordnet. Um eine sichere und zuverlässige Spanabfuhr zu ermöglichen, umfasst der Schneidkörper weiterhin eine Spanleitfläche, die zur Schneide hin orientiert ist und unter einem spitzen Winkel zur Bearbeitungsfläche ausläuft.

Die Spanleitfläche ist daher derart ausgebildet, dass sie möglichst stetig und ohne abrupten Übergang in die Bearbeitungsfläche übergeht. Insgesamt ist daher ein Spanleitelement ausgebildet, welches seitlich oder im Querschnitt betrachtet eine Art Keilform aufweist, wobei der Keil unter einem geringen Abstand über die Werkstückoberfläche "gleitet" und mit der Keilspitze voraus zur Schneide hin orientiert ist. Durch diese Maßnahme wird der von der Schneide abgetragene Span von der Werkzeugoberfläche durch die allmählich ansteigende Spanleitfläche abgehoben und sicher entfernt. Hierdurch ist eine Beschädigung der Werkzeugoberfläche vermieden.

Die Spanleitfläche dient neben der sicheren Spanableitung zusätzlich auch zur Spanformung. Hierzu ist die Spanleitfläche zweckdienlicherweise gekrümmt ausgebildet. Das die Spanleitfläche aufweisende Spanleitelement kann daher auch als Spanleitformer bezeichnet werden.

Die Radialrichtung und die Schnittrichtung sind durch die Anordnung insbesondere der Schneide definiert. Da der Schneideinsatz mit der Schneide an einem rotierbaren Werkzeuggrundkörper befestigt wird, muss nämlich in Umfangsrichtung oder Drehrichtung des Fräswerkzeuges vor der Schneide ein ausreichender Freiraum sein. Die Umfangs- oder Rotationsrichtung des Fräswerkzeugs wird hierbei als die Schnittrichtung verstanden. Die Radialrichtung ist senkrecht hierzu orientiert. Im Folgenden werden unter radialen Seiten oder Flächen derartige Flächen des Schneideinsatzes verstanden, die parallel oder im Wesentlichen parallel zur Radialrichtung verlaufen.

Ein derartiger Schneideinsatz ist zusammen mit einer Vielzahl weiterer Schneideinsätze zur Befestigung an einem zylinderförmigen Werkzeuggrundkörper vorgesehen, um einen Planfräser auszubilden. Der Schneideinsatz lässt sich auch bei anderen Fräswerkzeugen einsetzen. Der Schneideinsatz ist insbesondere zur Bearbeitung von Leichtmetall-Werkstücken mit hohen Schnittgeschwindigkeiten bis oberhalb von 2000 m pro Minute vorgesehen.

Im Hinblick auf die gewünschte sichere Spanabfuhr liegt der spitze Winkel vorzugsweise in einem Bereich von etwa 30 bis 60° und insbesondere bei etwa 45°.

Der Schneidkörper umfasst vorzugsweise eine Spankammer die eine im Wesentlichen in Schnittrichtung orientierte Spankammerwand aufweist, die die Spanleitfläche umfasst. Insbesondere ist diese in Schnittrichtung orientierte Spannkammerwand durch die Spanleitfläche gebildet. Die Haupterstreckungsrichtung der Spanleitfläche ist senkrecht zu der Umfangs- oder Rotationsrichtung (Schnittrichtung) des Fräswerkzeugs beim Einsatz orientiert. Der durch das Spanleitelement gebildete Keil ist daher in Radialrichtung orientiert, d.h. die Keilspitze weist radial nach außen.

Gemäß einer zweckdienlichen Weiterbildung ist die Spanleitfläche unter einem Neigungswinkel zur Axialrichtung geneigt angeordnet. Durch die geneigte Ausgestaltung wird der Span zuverlässig in die Spankammer hineingeleitet, ohne dass die Gefahr besteht, dass er in Schnittrichtung aus der Spankammer austritt.

Um eine zuverlässige und definierte Spanformung und Spanableitung zu erzielen ist die Spanleitfläche in einer zweckdienlichen Ausgestaltung gekrümmt ausgebildet und bildet in etwa eine Viertelkreisbahn. Die Spanleitfläche erstreckt sich daher in etwa über einen Winkelbereich von 90°.

Gemäß einer zweckdienlichen Weiterbildung umfasst die Spankammer eine radiale Spankammerwand, die sich im Wesentlichen in Radialrichtung erstreckt und zur Stirnseite hin orientiert ist. Zumindest im Bereich der Stirnseite ist sie zu dieser hin unter einem radialen Neigungswinkel geneigt angeordnet, so dass zwischen der radialen Spankammerwand und der stirnseitigen Fläche ein Winkel < 90° ausgebildet ist. Die radiale Spankammerwand läuft daher zur stirnseitigen Begrenzungsfläche des Schneideinsatzes nicht senkrecht aus, sondern bildet mit dieser ebenfalls einen spitzen Winkel, so dass auch hier eine Art Spanleitkeil ausgebildet ist, der für eine sichere Spanleitung in die Spankammer hinein sorgt.

Aufgrund der vorgesehenen hohen Schnittgeschwindigkeiten beim Hochgeschwindigkeitsfräsen von bis zu über 2000 m pro Minute wirken auf den Schneideinsatz sehr hohe Radialkräfte ein. Um auch während des Hochgeschwindigkeitsfräsens eine definierte Position des Schneideinsatzes zu gewährleisten, ist ein Hintergriffselement zur radialen Sicherung vorgesehen. Dieses Hintergriffselement übersteht eine sich in Radialrichtung erstreckende Schneidkörperauflagefläche, mit der der Schneideinsatz gegen eine Gegenanlage am Werkzeuggrundkörper verspannt wird. Das Hintergriffselement bildet daher im montierten Zustand einen in Radialrichtung wirksamen Formschluss aus. Diese Ausgestaltung ist prinzipiell auch unabhängig von der speziellen Geometrie und Anordnung der Spanleitfläche einsetzbar und ist allgemein für Schneideinsätze von Vorteil, die für ein Hochgeschwindigkeitsfräsen vorgesehen sind. Im Zusammenhang mit der Spanleitform hat diese Ausgestaltung zur radialen Sicherung den besonderen Vorteil, dass die für die gezielte Spanabfuhr notwendige definierte Solllage des gesamten Schneideinsatzes im Betrieb aufrecht erhalten wird. Die Einreichung einer Teilanmeldung auf diesen Aspekt unabhängig von der speziellen Ausgestaltung der Spanleitfläche bleibt vorbehalten.

Im Hinblick auf eine möglichst einfache Ausgestaltung ist der Schneidkörper gebildet aus einem Grundkörper und einem daran befestigten, die Schneide aufweisenden Schneidelement. Dieses ist insbesondere nach Art einer Schneidplatte ausgebildet und mit dem Grundkörper durch Kleben und insbesondere Löten dauerhaft verbunden.

Um gute Schneidergebnisse zu erzielen, insbesondere bei der Leichtmetall-Bearbeitung, besteht das Schneidelement gemäß einer zweckdienlichen Weiterbildung aus einem Diamant oder einem Bornitridschneidstoff. Hierbei werden insbesondere ein polykristalliner Diamant oder polykristallines Bornitrid eingesetzt. Alternativ können als Schneidstoffe für das Schneidelement auch Hartmetall oder Keramik eingesetzt werden.

In einer vorteilhaften Ausgestaltung ist der Grundkörper durch einen Sintervorgang hergestellt und geformt. Die Ausgestaltung als gesinterter Grundkörper ermöglicht eine wirtschaftliche Herstellung auch komplexer Geometrien mit den gewünschten Materialeigenschaften. Insbesondere bei der speziellen hier beschriebenen Geometrie der Spanleitfläche sind andere Herstellungsvarianten aufwändig und damit teuer. Die Ausbildung des Schneideinsatzes oder dessen Grundkörpers als ein Sinterkörper kann allgemein für Schneideinsätze verwendet werden und ist nicht auf einen Schneideinsatz mit der speziellen, hier beschriebenen Spanleitfläche beschränkt. Die Einreichung einer Teilanmeldung auf diesen Aspekt unabhängig von der speziellen Ausgestaltung der Spanleitfläche bleibt vorbehalten.

Zweckdienlicherweise ist der gesinterte Grundkörper hierbei aus einem Metallpulver hergestellt. Dieses hat vorzugsweise als Basisstoff Eisen und weist Beimischungen von Nickel und Kupfer auf. Zweckdienlicherweise liegt hierbei der Anteil von Nickel im Bereich von etwa 3,5-4,5 Gew.%, der Anteil von Kupfer im Bereich von etwa 1,2-1,8 Gew.%. Weiterhin ist ein Anteil von Molybdän im Bereich von etwa 0,4 - 0,6 Gew.% vorgesehen. Die restlichen Anteile sind Eisen. Zuzüglich weist der gesinterte Grundkörper Zusatzstoffe insbesondere im Bereich von 0,7 - 0,9 Gew.% auf, die als Sinterhilfsmittel zugegeben sind.

Um eine sichere, störungsfreie und möglichst reibungsarme Spanableitung zu ermöglichen, ist gemäß einer vorteilhaften Weiterbildung der Schneideinsatz zumindest in Teilbereichen mit einer geeigneten Beschichtung versehen. Diese Beschichtung ist eine Gleitschicht- oder eine Hartstoff- Beschichtung. Sie ist hierbei insbesondere in den Bereichen des Schneideinsatzes aufgebracht, die mit den Spänen in Berührung kommen. Dies ist insbesondere die Spanleitfläche sowie die weiteren die Spankammer begrenzenden Spankammerwände. Prinzipiell kann auch der gesamte Schneideinsatz mit der Beschichtung versehen werden. Lediglich das mit der Schneide versehene Schneidelement ist beim Beschichtungsvorgang abzudecken, um eine Beschichtung der Schneide zu vermeiden. Als Gleitschicht bietet sich hierbei insbesondere eine MoS₂-Schicht oder eine DLC-Schicht (Diamond like carbon) an. Als Hartstoffschicht bietet sich beispielsweise eine TiAIN-Schicht oder eine TiB₂-Schicht an.

Ein Ausführungsbeispiel der Erfindung wird im Folgenden anhand der Zeichnung näher erläutert. Es zeigen jeweils in schematischen und teilweise vereinfachten Darstellungen:
- Fig. 1: einen Schneideinsatz in einer ersten perspektivischen Darstellung,
- Fig. 2: den Schneideinsatz in einer zweiten perspektivischen Darstellung,
- Fig. 3: eine Aufsicht von oben auf die Oberseite des Schneideinsatz gemäß der Fig. 1 und 2 in einer schematischen Darstellung,
- Fig. 4: eine Aufsicht von vorne auf eine Spankammerseite des Schneideinsatzes,
- Fig. 5: eine Aufsicht von unten auf eine Werkstückseite des Schneideinsatzes,
- Fig. 6: eine ausschnittsweise Darstellung des in Fig. 4 mit einem Kreis ge- kennzeichneten Bereichs, in dem ein Schneidelement angeordnet ist, und
- Fig. 7: eine perspektivische Ansicht eines Planfräsers mit einer Vielzahl von um den Umfang angeordneten Schneideinsätzen.

In den Figuren sind gleich wirkende Teile mit den gleichen Bezugszeichen versehen.

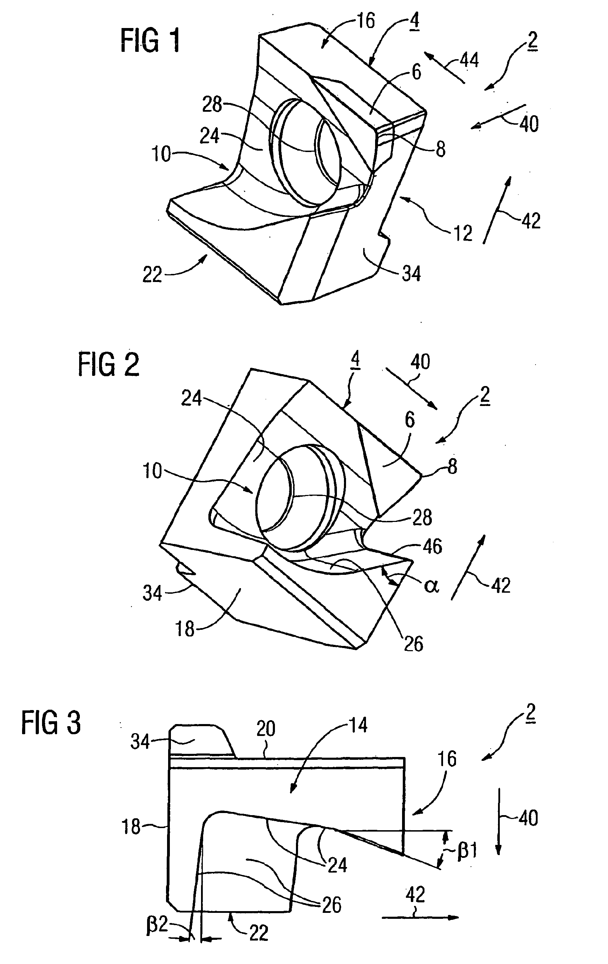

Der in den Fig. 1 bis 5 dargestellte Schneideinsatz ist gebildet durch einen einstückigen Schneidkörper 2, welcher wiederum gebildet ist aus einem gesinterten Grundkörper 4 und einem an diesem insbesondere durch Hartlöten befestigten Schneidelement 6. Das Schneidelement 6 ist - wie insbesondere aus den Fig. 1 und 2 zu entnehmen ist - eine nach Art eines Prismas ausgebildete Schneidplatte. Das Schneidelement 6 besteht insbesondere aus einem polykristallinen Diamantwerkstoff. Der Grundkörper 4 wird durch einen Sinterprozess eines Metallpulvers hergestellt. Durch dieses Formgebungs- und Herstellungsverfahren des Grundkörpers 4 ist insbesondere die komplexe Geometrie des Ausführungsbeispiels wirtschaftlich und mit vergleichsweise geringem Aufwand herstellbar.

Das Schneidelement 6 weist eine insbesondere als Schneideck ausgebildete Schneide 8 auf. Bei der zerspanenden Bearbeitung eines metallischen Werkstücks steht diese Schneide 8 im Eingriff mit der Oberfläche des Werkstücks.

Der Schneidkörper 2 weist insgesamt eine in etwa quaderförmige Grundgeometrie auf, wobei ein Teil dieser quaderförmigen Grundgeometrie frei von Material ist und eine Spankammer 10 bildet. Der Schneidkörper 2 hat eine untere, bei der Bearbeitung dem Werkstück zugeordnete Werkstückseite 12 und dieser gegenüberliegend eine etwa parallel hierzu verlaufende Oberseite 14. Die zwischen diesen beiden Seiten 12,14 befindlichen vier weiteren Quaderseiten sind eine vordere Stirnseite 16, die zumindest im Wesentlichen senkrecht zu der Werkstückseite 12 ausgebildet ist, eine zu dieser parallel orientierte Anlagefläche 18, eine Schneidkörperauflagefläche 20 sowie gegenüberliegend zur Schneidkörperauflagefläche 20 eine Spankammerseite 22. Die Spankammer 10 selbst ist begrenzt durch eine radiale Spankammerwand 24 sowie durch eine weitere etwa senkrecht hierzu angeordnete Spankammerwand, die als Spanleitfläche 26 ausgebildet ist.

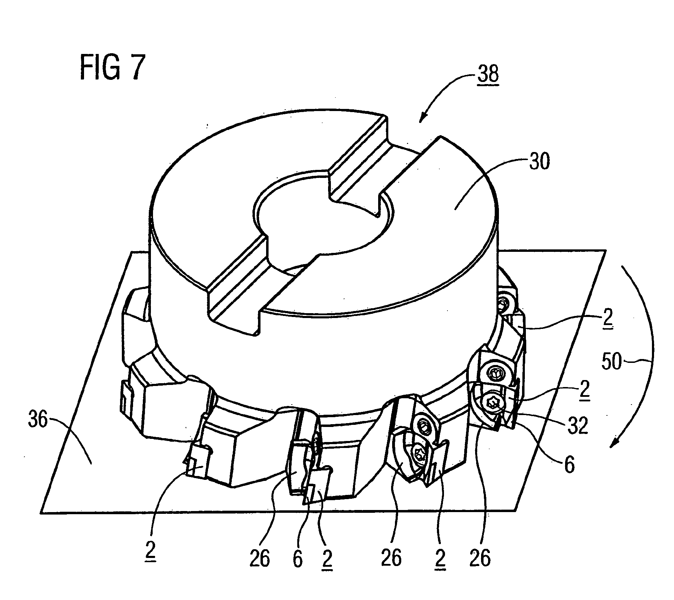

Etwa mittig in der radialen Spankammerwand 24 ist eine Durchgangsbohrung 28 angebracht, durch die zur Befestigung an einem Werkzeuggrundkörper 30 ein Befestigungselement, insbesondere Befestigungsschraube 32, durchgeführt ist (vgl. Fig. 7).

Der Schneidkörper 2 weist weiterhin an seiner Schneidkörperauflagefläche 20 ein aus der Fläche hervorstehendes Hintergriffselement 34 auf. Dieses ist im Wesentlichen nach Art eines langgestreckten Quaders mit einer Einführschräge ausgebildet und fluchtet mit der axialen Anlagefläche 18. Das Hintergriffselement 34 ist daher im von der Schneide 8 entfernten rückwärtigen Bereich angeordnet. Wie insbesondere aus Fig. 2 zu entnehmen ist, ist das Hintergriffselement 34 von der Oberseite 14 um einen Versatz zurückversetzt.

Die Werkstückseite 12 definiert im Wesentlichen eine Bearbeitungsfläche 36, wie sie in Fig. 7 dargestellt ist. Diese Bearbeitungsfläche 36 entspricht der durch die einzelnen Schneidecken der Schneiden 8 aufgespannten Ebene beim in Fig. 7 gezeigten Planfräser 38.

Allgemein wird der Schneidkörper 2 an dem rotierbaren, im Wesentlichen zylinderförmigen Werkzeuggrundkörper 30 befestigt. Das Schneidelement 6 ist mit seinem einen freien Ende zur Spankammer 10 und in Rotations- oder Umfangsrichtung orientiert. Diese Umfangsrichtung wird im Folgenden als Schnittrichtung 40 bezeichnet. Senkrecht hierzu ist eine Radialrichtung 42 definiert. Gemeinsam spannen sie die Bearbeitungsfläche 36 auf. Senkrecht zu dieser Fläche ist eine Axialrichtung 44 orientiert.

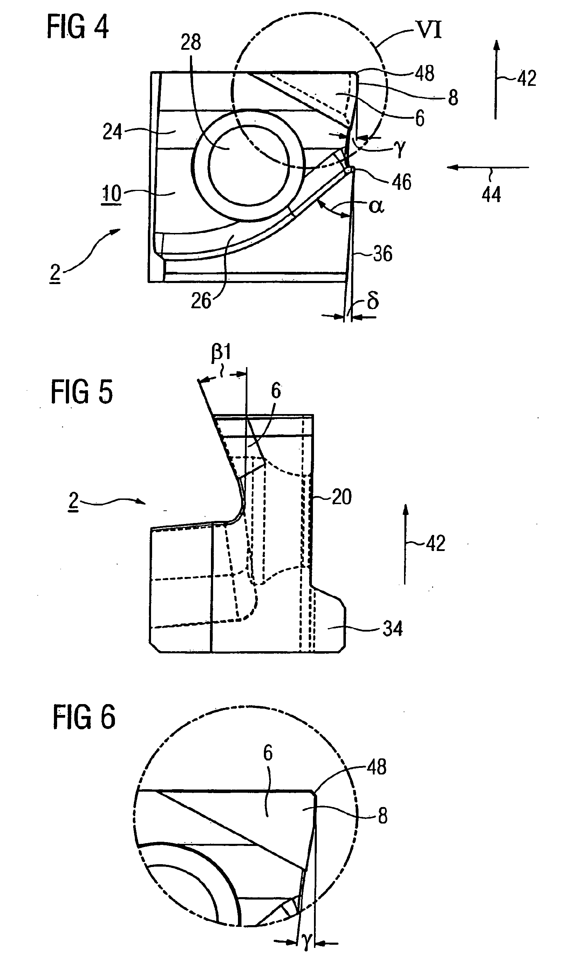

Wie insbesondere aus der perspektivischen Darstellung der Fig. 2 zu entnehmen ist, bildet die Spanleitfläche 26 die Oberfläche eines integral mit dem Schneidkörper 2 verbundenen Spanleitelements. Dieses ist nach Art eines Keils ausgebildet, dessen Keilspitze zum Schneidelement 6 hin orientiert ist. Die Keiloberfläche wird von der Spanleitfläche 26 gebildet. Die Keilunterseite wird von der zum Werkstück hin orientierten Werkstückseite 12 gebildet. Das keilförmige Spanleitelement liegt daher bei der Werkstückbearbeitung annähernd auf dessen Oberfläche auf. Die Spanleitfläche 26 läuft unter Ausbildung eines spitzen Keilwinkels α zur Bearbeitungsfläche 36 hin aus. Die vordere Kante 46, die die Spanleitfläche 26 begrenzt, ist in Radialrichtung 42 vom Schneidelement 6 zurückversetzt. Der Keilwinkel α liegt im Ausführungsbeispiel bei etwa 50°. Die Definition des Keilwinkels α ergibt sich am besten aus der Darstellung gemäß Fig. 4.

Wie insbesondere aus den Darstellungen der Fig. 2 und 3 zu entnehmen ist, weist der Schneidkörper 2 einen zweiten Spanleitkeil auf, und zwar ist dieser gebildet durch die vorderen Stirnseite 16 und den Verlauf der radialen Spankammerwand 24 im Bereich der vordere Stirnseite 16. Im Bereich des Schneidelements 6 verläuft die radiale Spankammerwand 24 unter einem radialen Neigungswinkel β1 zu der Radialrichtung 42. Der radiale Neigungswinkel β1 liegt vorzugsweise zwischen 20 und 45°. Im Ausführungsbeispiel beträgt er etwa 30°.

Ebenso wie die radiale Spankammerwand 24 ist auch die die Spanleitfläche 26 bildende Spankammerwand gegenüber der reinen Schnittrichtung 40 um einen Neigungswinkel β2 geneigt angeordnet, wie insbesondere aus Fig. 3 zu entnehmen ist. Der Neigungswinkel β2 liegt beispielsweise im Bereich zwischen 15° und 30°.

Aus den Fig. 4 bis 6 sind weitere Details des Schneidkörpers 2 zu entnehmen. Fig. 4 zeigt hierbei eine Aufsicht auf die Spankammerseite 22. Hieraus sind der Keilwinkel α sowie der gekrümmte Verlauf der Spanleitfläche 26 zu entnehmen. Diese verläuft in etwa auf einer ansatzweisen Kreisbahn und überstreicht einen Winkelbereich von etwa 90°. Weiterhin ist aus Fig. 4 zu entnehmen, dass in Radiatrichtung 42 im Anschluss an die Schneide 8 das Schneidelement 6 einen positiven Spanwinkel γ in der Größenordnung von etwa 10° aufweist. Die zur Werkstückseite 12 in orientierte Unterseite des Spanleitelements (Keilunterseite) ist von der Bearbeitungsfläche 36 oder Bearbeitungsebene etwas zurückversetzt und ist in Radialrichtung 42 geringfügig gegen diese geneigt verlaufend ausgebildet. Der diesbezügliche Neigungswinkel δ liegt im Ausführungsbeispiel bei etwa 3°.

Fig. 5 zeigt den in Fig. 4 dargestellten Schneidkörper 2, nachdem er um 90° gegen den Uhrzeigersinn gekippt wurde. Fig. 5 zeigt daher eine Aufsicht von unten auf die dem zu bearbeitenden Werkstück zugewandte Werkstückseite 12. Aus dieser Darstellung ist noch einmal gut der Neigungswinkel β1 zu entnehmen, der hier 22° beträgt. Weiterhin ist aus Fig. 5 das Hintergriffselement 34 deutlich zu entnehmen.

Fig. 6 zeigt eine vergrößert Darstellung des mit einem Kreis in Fig. 4 gekennzeichneten Schneidenbereichs. Aus Fig. 4 und Fig. 6 ist zu entnehmen, dass das Schneidelement 6 mit der vorderen Stirnseite 16 plan abschließt und im Kantenbereich zur Werkstückseite 12 hin die Schneide 8 ausbildet. Im Kantenbereich weist die Schneide 8 eine Fase 48 auf.

Aus Fig. 7 ist der Planfräser 38 mit über seinen Umfang verteilt angeordneten Schneidkörpern 2 dargestellt. Die einzelnen Schneidkörper 2 werden in taschenartigen Ausnehmungen des Werkzeuggrundkörpers 30 eingesetzt. Die Schneidkörper 2 können alternativ auch in dafür vorgesehene Kassetten eingesetzt werden, die am Werkzeuggrundkörper 30 befestigt sind. Die einzelnen Schneidkörper 2 werden hierbei mit ihrer Schneidkörperauflagefläche 20 sowie mit ihrer Anlagefläche 18 gegen korrespondierende Gegenanlageflächen des Werkzeuggrundkörpers 30 gespannt. Dieser weist hierbei eine hier nicht zu erkennende Ausnehmung zur Aufnahme des Hintergriffselements 34 auf. Das Hintergriffselement 34 liegt in dieser Ausnehmung passgenau und formschlüssig ein, so dass ein in Radialrichtung 42 wirkender Formschluss gebildet ist. Die Rotationsrichtung 50 des Planfräsers 38 beim Fräsen ist durch einen Pfeil angedeutet. Der Werkzeuggrundkörper 30 besteht vorzugsweise aus Leichtmetall.

Der hier beschriebene Schneidkörper 2 zeichnet sich durch eine sehr wirksame und zuverlässige Spanabfuhr insbesondere beim Hochgeschwindigkeitsfräsen von Leichtmetall-Werkstücken aus. Durch die zu der Bearbeitungsfläche 36 und in einem spitzen Winkel hin auslaufende Spanleitfläche 26 erfolgt eine sichere Spanableitung und eine definierte Spanformung, so dass eine Beschädigung sowohl des Fräswerkzeugs 38 als auch des zu bearbeitenden Werkstücks vermieden ist. Die gezielte Spanführung wird zusätzlich durch die zueinander geneigte Ausgestaltung der Spanleitfläche 26 und der radialen Spankammerwand 24 unterstützt, so dass der Span in die Spankammer hineingeleitet und anschließend in Z-Richtung von der zu bearbeitenden Werkstückoberfläche weggeführt wird.

## Patentansprüche

1. Schneideinsatz für ein Fräswerkzeug (38), mit einem Schneidkörper (2), der aufweist
- eine Werkstückseite (12), die eine durch eine Radialrichtung (42) und eine Schnittrichtung (40) aufgespannte Bearbeitungsfläche (36) definiert,
- eine an die Werkstückseite (12) angrenzende, durch die Schnittrichtung (40) und eine Axialrichtung (44) aufgespannte vordere Stirnseite (16),
- eine Schneide (8) zur spanenden Bearbeitung eines Werkstücks, die in einem in Schnittrichtung (40) betrachtet vorderen Eckbereich angeordnet ist, der von der Werkstückseite (12) und der Stirnseite (16) gebildet ist,
- eine Spanleitfläche (26), die sich in Schnittrichtung (40) über die Schneide (8) hinaus erstreckt und von dieser in Radialrichtung (42) beabstandet ist,
,**dadurch gekennzeichnet, dass** die Spanleitfläche (26) zur Schneide (8) hin orientiert unter einem spitzen Winkel (α) zur Bearbeitungsfläche (36) ausläuft.

2. Schneideinsatz nach Anspruch 1, **dadurch gekennzeichnet, dass** der spitze Winkel (α) in einem Bereich von etwa 30 bis 60°, insbesondere etwa bei 45° liegt.

3. Schneideinsatz nach Anspruch 1 oder 2, **dadurch gekennzeichnet, dass** der Schneidkörper (2) eine Spankammer (10) mit einer in Schnittrichtung (40) orientierten Spankammerwand aufweist, die die Spanleitfläche (26) umfasst.

4. Schneideinsatz nach einem der vorhergehenden Ansprüche, **dadurch gekennzeichnet, dass** die Spanleitfläche (26) unter einem Neigungswinkel (β2) zur Schnittrichtung (40) geneigt angeordnet ist.

5. Schneideinsatz nach einem der vorhergehenden Ansprüche, **dadurch gekennzeichnet, dass** die Spanleitfläche (26) gekrümmt ist und etwa eine Viertelkreisbahn bildet.

6. Schneideinsatz nach einem der Ansprüche 3 bis 5, **dadurch gekennzeichnet, dass** die Spankammer (10) eine sich in etwa in Radialrichtung (42) erstreckende Spankammerwand (24) aufweist, die zur vorderen Stirnseite (16) hin unter einem radialen Neigungswinkel (β1) zur Radialrichtung (42) geneigt angeordnet ist, so dass zwischen der Spankammerwand (24) und der stirnseitigen Fläche ein Winkel < 90° ausgebildet ist.

7. Schneideinsatz nach einem der vorhergehenden Ansprüche, **dadurch gekennzeichnet, dass** der Schneidkörper (2) eine sich in Radialrichtung (42) erstreckende Schneidkörperauflagefläche (20) zur Anlage am Werkzeug aufweist, aus der ein Hintergriffselement (34) übersteht.

8. Schneideinsatz nach einem der vorhergehenden Ansprüche, **dadurch gekennzeichnet, dass** der Schneidkörper (2) gebildet ist aus einem Grundkörper (4) und einem daran befestigten Schneidelement (6), das die Schneide (8) aufweist.

9. Schneideinsatz nach Anspruch 8, **dadurch gekennzeichnet, dass** das Schneidelement (6) aus einem Diamantschneidstoff oder einem Bohrnitridschneidstoff besteht.

10. Schneideinsatz nach Anspruch 8 oder 9, **dadurch gekennzeichnet, dass** der Grundkörper (4) als ein gesinterter Grundkörper (4) ausgebildet ist.

11. Schneideinsatz nach Anspruch 10, **dadurch gekennzeichnet, dass** der gesinterte Grundkörper (4) aus einem Metallpulver hergestellt ist.

12. Schneideinsatz nach Anspruch 11, **dadurch gekennzeichnet, dass** der gesinterte Grundkörper (4) als Basisstoff Eisen mit Beimischungen von Nickel und Kupfer aufweist.

13. Schneideinsatz nach Anspruch 12, **dadurch gekennzeichnet, dass** sich der gesinterte Grundkörper (4) aus Nickel im Bereich von etwa 3,5-4,5 Gew.%, aus Kupfer im Bereich von etwa 1,2-1,8 Gew. %, aus Molybdän im Bereich von etwa 0,4 - 0,6 Gew.% und dem Rest Eisen zusammensetzt.

14. Schneideinsatz nach einem der vorhergehenden Ansprüche, **dadurch gekennzeichnet, dass** er zumindest im Bereich der Spanleitfläche (26) mit einer Gleitschicht - oder einer - Hartstoff-Beschichtung versehen ist.

15. Fräswerkzeug, insbesondere Stirn- oder Planfräser (38), mit mehreren Schneideinsätzen nach einem der vorhergehenden Ansprüche.

## Claims

1. Cutting insert for a milling tool (38), comprising a cutting body (2) which has
- a workpiece side (12) which defines a machining area (36) determined by a radial direction (42) and a cutting direction (40),
- a front end face (16) adjoining the workpiece side (12) and determined by the cutting direction (40) and an axial direction (44),
- a cutting edge (8) for machining a workpiece, said cutting edge (8) being arranged in a front corner region as viewed in cutting direction (40), said corner region being formed by the workpiece side (12) and the end face (16),
- a chip breaker surface (26) which extends beyond the cutting edge (8) in cutting direction (40) and is at a distance from said cutting edge (8) in radial direction (42),
**characterized in that** the chip breaker surface (26) is oriented towards the cutting edge (8) and runs out at an acute angle (α) to the machining area (36).

2. Cutting insert according to Claim 1, **characterized in that** the acute angle (α) is within a range of about 30 to 60° and in particular is about 45°.

3. Cutting insert according to Claim 1 or 2, **characterized in that** the cutting body (2) has a chip space (10) having a chip space wall which is oriented in cutting direction (40) and comprises the chip breaker surface (26).

4. Cutting insert according to one of the preceding claims, **characterized in that** the chip breaker surface (26) is arranged inclined to the cutting direction (40) at an inclination angle (β2).

5. Cutting insert according to one of the preceding claims, **characterized in that** the chip breaker surface (26) is curved and forms approximately a quarter circle path.

6. Cutting insert according to one of Claims 3 to 5, **characterized in that** the chip space (10) has a chip space wall (24) which extends approximately in radial direction (42) and is arranged inclined towards the front end face (16) at a radial inclination angle (β1) to the radial direction (42), such that an angle < 90° is formed between the chip space wall (24) and the end face.

7. Cutting insert according to one of the preceding claims, **characterized in that** the cutting body (2) has a cutting-body locating surface (20) extending in radial direction (42) for bearing against the tool, from which cutting-body locating surface (20) a rear engagement element (34) projects.

8. Cutting insert according to one of the preceding claims, **characterized in that** the cutting body (2) is formed from a parent body (4) and a cutting element (6) which is fastened thereto and has the cutting edge (8).

9. Cutting insert according to Claim 8, **characterized in that** the cutting element (6) is made of a diamond cutting material or a boron nitride cutting material.

10. Cutting insert according to Claim 8 or 9, **characterized in that** the parent body (4) is designed as a sintered parent body (4).

11. Cutting insert according to Claim 10, **characterized in that** the sintered parent body (4) is produced from a metal powder.

12. Cutting insert according to Claim 11, **characterized in that** the sintered parent body (4) has, as base material, iron with admixtures of nickel and copper.

13. Cutting insert according to Claim 12, **characterized in that** the sintered parent body (4) is composed of nickel within the range of about 3.5-4.5% by weight, of copper within the range of about 1.2-1.8% by weight, of molybdenum within the range of about 0.4-0.6% by weight and the rest iron.

14. Cutting insert according to one of the preceding claims, **characterized in that** it is provided with a sliding layer or a hard-material coating at least in the region of the chip breaker surface (26).

15. Milling tool, in particular an end or face mill (38), having a plurality of cutting inserts according to one of the preceding claims.

## Revendications

1. Insert de coupe pour un outil de fraisage (38), comprenant un corps de coupe (2) qui présente :
- un côté pièce (12), qui définit une surface d'usinage (36) tendue par une direction radiale (42) et une direction de coupe (40),
- un côté frontal avant (16) adjacent au côté pièce (12), tendu par la direction de coupe (40) et une direction axiale (44),
- un tranchant (8) pour l'usinage par enlèvement de copeaux d'une pièce qui est disposée dans une région de coin avant, considérée dans la direction de coupe (40), qui est formée par le côté pièce (12) et le côté frontal (16),
- une surface de guidage des copeaux (26) qui s'étend dans la direction de coupe (40) au-delà du tranchant (8) et qui est espacée de celui-ci dans la direction radiale (42),
**caractérisé en ce que** la surface de guidage des copeaux (26) est orientée vers le tranchant (8) et se termine en formant un angle aigu (α) avec la surface d'usinage (36).

2. Insert de coupe selon la revendication 1, **caractérisé en ce que** l'angle aigu (α) se situe dans une région d'environ 30 à 60°, notamment d'environ 45°.

3. Insert de coupe selon la revendication 1 ou 2, **caractérisé en ce que** le corps de coupe (2) présente une chambre de copeaux (10) avec une paroi de chambre de copeaux orientée dans la direction de coupe (40), qui entoure la surface de guidage des copeaux (26).

4. Insert de coupe selon l'une quelconque des revendications précédentes, **caractérisé en ce que** la surface de guidage des copeaux (26) est disposée de manière inclinée suivant un angle d'inclinaison (β2) par rapport à la direction de coupe (40).

5. Insert de coupe selon l'une quelconque des revendications précédentes, **caractérisé en ce que** la surface de guidage des copeaux (26) est courbe et forme approximativement une trajectoire en quart de cercle.

6. Insert de coupe selon l'une quelconque des revendications 3 à 5, **caractérisé en ce que** la chambre de copeaux (10) présente une paroi de chambre de copeaux (24) s'étendant approximativement dans la direction radiale (42), qui est disposée de manière inclinée par rapport au côté frontal avant (16) suivant un angle d'inclinaison radial (β1) par rapport à la direction radiale (42), de sorte qu'entre la paroi de chambre de copeaux (24) et la surface frontale soit réalisé un angle < 90°.

7. Insert de coupe selon l'une quelconque des revendications précédentes, **caractérisé en ce que** le corps de coupe (2) présente une surface d'appui de corps de coupe (20) s'étendant dans la direction radiale (42) pour l'application contre l'outil, depuis laquelle dépasse un élément d'engagement par l'arrière (34).

8. Insert de coupe selon l'une quelconque des revendications précédentes, **caractérisé en ce que** le corps de coupe (2) est formé d'un corps de base (4) et d'un élément de coupe (6) fixé sur lui, qui présente le tranchant (8).

9. Insert de coupe selon la revendication 8, **caractérisé en ce que** l'élément de coupe (6) se compose d'un matériau coupant en diamant ou d'un matériau coupant en nitrure de bore.

10. Insert de coupe selon la revendication 8 ou 9, **caractérisé en ce que** le corps de base (4) est réalisé sous forme de corps de base fritté (4).

11. Insert de coupe selon la revendication 10, **caractérisé en ce que** le corps de base fritté (4) est fabriqué en poudre métallique.

12. Insert de coupe selon la revendication 11, **caractérisé en ce que** le corps de base fritté (4) présente en tant que substance de base du fer additionné de nickel et de cuivre.

13. Insert de coupe selon la revendication 12, **caractérisé en ce que** le corps de base fritté (4) se compose de nickel dans une plage d'environ 3,5 à 4,5 % en poids, de cuivre dans une plage d'environ 1,2 à 1,8 % en poids, de molybdène dans une plage d'environ 0,4 à 0,6 % en poids et le reste étant du fer.

14. Insert de coupe selon l'une quelconque des revendications précédentes, **caractérisé en ce qu'**il est pourvu au moins dans la région de la surface de guidage des copeaux (26) d'une couche de glissement ou d'un revêtement de substance dure.

15. Outil de fraisage, notamment fraise en bout ou fraise à surfacer (38), avec plusieurs inserts de coupe selon l'une quelconque des revendications précédentes.
